# EUROPEAN PATENT SPECIFICATION

(11) **EP 3 168 704 B1**
(45) Date of publication and mention of the grant of the patent: **24.02.2021**
(21) Application number: 15194351.1
(22) Date of filing: 12.11.2015
(51) Int. Cl.: G05D 1/00, G01B 11/25, H04N 13/254

(54) **3D SURVEYING OF A SURFACE BY MOBILE VEHICLES**
3D ÜBERWACHUNG EINER FLÄCHE DURCH MOBILE FAHRZEUGE
INSPECTION EN 3D D'UNE SURFACE AU MOYEN DE VÉHICULES MOBILES

(43) Date of publication of application: 17.05.2017
(73) Proprietor: Hexagon Technology Center GmbH, 9435 Heerbrugg (CH)
(72) Inventor: PETTERSSON, Bo, L-1225 Luxembourg (LU); SIERCKS, Knut, CH-9402 Mörschwil (CH)
(74) Representative: Kaminski Harmann

(56) References cited:
- EP-A1- 1 607 710
- WO-A1-2007/051972
- JULES S JAFFE ED - JAN VERDAASDONK ET AL: "Multi Autonomous Underwater Vehicle Optical Imaging for Extended Performance", OCEANS 2007 - EUROPE, IEEE, PI, 1 June 2007 (2007-06-01), pages 1-4, XP031134229, ISBN: 978-1-4244-0634-0
- Jhr Burns ET AL: "Integrating structure-from-motion photogrammetry with geospatial software as a novel technique for quantifying 3D ecological characteristics of coral reefs", PeerJ, vol. 3, 7 July 2015 (2015-07-07), page e1077, XP055577536, DOI: 10.7717/peerj.1077

## Description

The present invention relates generally to a system for three dimensional surveying according to claim 1 and to a method for three dimensional surveying according to claim 11.

It is common practice to use mobile vehicles for surveying purposes to gain three dimensional information - or in other words to survey the topography of the environment or part of it as targeted surface. In particular of interest is a usage of unmanned mobile vehicles, equipped with surveying equipment. For example, unmanned airborne vehicles - also called UAVs or drones, unmanned ground vehicles - also called UGVs or rovers, unmanned surface vehicles - also called USVs or unmanned marine vessels, unmanned underwater vehicles - also called UUVs or underwater drones, or the like.

In many instances, it is appreciated to use mobile surveying vehicles which are at least partially or preferably fully autonomous. Such an at least partially or fully autonomous usage means for example, that the vehicles can be controlled by high level commands like, "move to this position", "survey this room or area", "follow this object" "survey this track", etc., wherein the mobile vehicle is capable to automatically complete this task and to avoid obstructions and crashes, automatically navigate in an area even when it is partially or fully unknown, automatically complement gaps in already gained surveying information, etc. In other words, a human operator is not required to control every detail of the movement of the mobile vehicle, but only needs to provide general directives.

For example, EP 2 511 656 shows a measurement system for determination of 3D coordinates of measurement points on an industrial product. A scanning apparatus carried in an unmanned, controllable, automobile aircraft determines measurement points in an inner scanning coordinate system. A referencing arrangement is providing referencing information of the scanning apparatus, for referencing the inner measurement point coordinates in the outer object coordinate system. An evaluation unit determines 3D coordinates of the measurement points in the outer object coordinate system, such that the inner measurement point coordinates are in the form of 3D coordinates in the outer object coordinate system.

As another example, EP 2 511 659 shows a geodetic marking system for marking a known target point, with a self-propelled, unmanned, remotely controllable sighting unit with a geodetic position determining arrangement for a determination of the actual position of the sighting unit. The sighting unit can be positioned at least temporarily in a hovering fashion largely fixed in position. The sighting unit carries a marking unit for marking the target point, and a control unit, so that the sighting unit can be positioned in a defined desired position relative to the target point position as a function of the external actual position. The control unit takes into account the actual position, the desired position and a defined marking direction from the marking unit to the target point, so that the target point can be marked with geodetic accuracy.

EP 2787319 shows a method for air image capture with an unmanned and controllable aircraft comprising a camera. EP 1 607 710 shows a weapon guidance system, where the weapon's target is designated by a pointing laser transmitted from a remote platform.

The paper "Multi Autonomous Underwater Vehicle Optical Imaging for Extended Performance" of JULES S JAFFE EO- JAN VERDAASDONK ET AL, in OCEANS 2007- EUROPE, IEEE, PI, of June 1, 2007, at pages 1-4, describes a simulation of seabed exploration by submarine vehicles. It proposes a distributed camera - illumination arrangement to overcome the known problems due to the attenuation and scattering of light in sea-water in this specific application of underwater optical imaging of the sea floor and to also increase the baseline between projector and camera at the submarine vehicle, without enlarging the submarine vehicle itself.

EP 0 251 178 shows an example of a geodetic measurement system having a geodetic measurement unit that comprises an emission unit with at least one radiation source for a collimated optical beam. The measurement system also has a self-propelled, unmanned, controllable flight vehicle with an optical module which vehicle can be moved under control and can be positioned in a substantially fixed position. An evaluation determines an actual state of the flight vehicle by a position, an alignment and/or a change in position in a coordinate system from an interaction of the optical beam with the optical module. The measurement system has a control unit for controlling the flight vehicle in such a way that control data can be produced with an algorithm as a function of the actual state and a defined desired state, and an automatic control can bring the flight vehicle to the desired state.

EP 2 811 255, IL 193486 US 2010/139995, KR 101431383, KR 20030069709, JP 2002307340, CN 104080579 or CN 102819263 are showing examples of similar unmanned ground vehicles. KR 2009 0069535, KR 2011 0052102, WO 2010/123380 or US 6,802,236 are showing examples of similar unmanned water vehicles. Such air, ground and/or water vehicles can all be mobile vehicles according to the invention.

A problem with above mentioned prior art is the fact, that a surveying and/or navigation by visual information from a camera, which for example comprises a structure from motion and/or a simultaneous location and mapping algorithm or the like depends on automatically detectable and distinguishable visual features within the camera image. If such features are rare, missing or ambiguous, the visual surveying algorithms have difficulties, become inaccurate or even produce wrong surveying results.

It is therefore an object of the present invention to improve a surveying by mobile vehicle, in particular in view of unfavorable conditions of the target surface to be surveyed.

A further object of the invention is to gain more flexibility in a three dimensional surveying system based on a camera vision system, in particular in view making it more autonomous and adaptable to its environment.

It is a special object to improve the surveying result by unmanned mobile vehicle which are navigating at least partially through an at least partially unknown territory, which's surface has to be surveyed to gain three dimensional information.

Another special object of the invention is to provide a method and a surveying system by mobile vehicles which can survey a topology of optically uniform surfaces by imaging with one or more cameras, wherein the mobile vehicles are preferably moving at least partially autonomous.

Those objects are achieved by realising the features of the independent claims. Features which further develop the invention in an alternative or advantageous manner are described in the dependent patent claims.

The present invention relates to a system for three dimensional surveying of a surface, which system comprises at least a first mobile vehicle with at least one camera unit having its field of view at least partially directed towards the surface for imaging the surface. The system also comprises a computer-vision unit built to execute a visual surveying algorithm based on images from the camera unit for determining a topology of the surface and a location relative to the surface, in particular in form of a point cloud.

According to the present invention, the system also comprises at least a second mobile vehicle, comprising a light projection unit built to emit a defined structured light pattern onto the surface.

Thereby, the camera unit of the first mobile vehicle at least partially images the structured light pattern projected from the second mobile vehicle to the surface. The computer-vision unit executes the visual surveying algorithm with an evaluation of the structured light pattern, in particular with an evaluation the first mobile vehicles images of the structured light pattern that is emitted from the second vehicle. In other word this means that the visual surveying at least partially bases on the fact that the camera unit images the projected pattern distorted according to the topographical relief of surface that is to be determined and whereof the three dimensional information of the surface can be determined.

The first and second mobile vehicles are separate from each other, which means that a relative position from at least one of the first mobile vehicle with respect to at least one of the second mobile vehicle can varied and controlled by at least one of the first mobile vehicles. Therefore, according to the invention, the origin of the projection at the second mobile vehicle can freely move with respect to the surface and/or with respect to the surveying camera at the first mobile vehicle. In other words, camera unit and projection unit are not mechanically fixed with respect to each other.

The visual surveying algorithm comprises a simultaneous location and mapping (SLAM) algorithm, determining the topology of the surface and the location relative to the surface.

The first and the second mobile vehicle can be unmanned mobile vehicles, which in particular can be built to move autonomous under control of a comprised computation unit based on the determined topology of the surface and/or a location of the mobile vehicle relative to the surface.

In an embodiment of the invention, least one of the first and/or second mobile vehicle can be an unmanned aerial vehicle (UAV). In particular, at least one of the first and at least one of the second mobile vehicles can be an UAV or all mobile vehicles can be UAVs.

At least one of the first and/or second mobile vehicles can comprise a location referencing unit, built to provide a position information of the mobile vehicle, in particular a relative position information with respect to another mobile vehicle and/or absolute position information with respect to geodetic-coordinates. For example a laser distance meter, a navigation satellite receiver, etc. The surveying system can thereby be aided by a GNSS location and navigation system, such as a navigation satellite receiver like GPS or Glonas, or another radio navigation system based on similar principles. Technical implementation details can for example be handled similar as described in the above sited prior art or in a combination thereof.

At least one of the first and/or second mobile vehicles can also emit guidance light beam for guiding one or more of the remaining mobile vehicles, which are evaluating the guidance light beam or its projection on the surface, in particular wherein the guidance light beam can be coded by a modulation for transmitting remote control data for the evaluating mobile vehicle.

The emitted structured light pattern can be established by the light projection unit. The light projection unit can therefore comprise a fixed and/or dynamic masking of the light projection, like a fixed mask, a hologram, a diffraction grating, a LCD or DLP projector, etc. Alternatively or in addition, a moving beam can be used to establish the pattern, which can be done by scanning the beam along a desired path either with and/or without modulating the intensity of the moving beam during moving.

The structured light pattern can therein comprise a plurality of specks of different light intensity on the surface it is emitted to. The structured light pattern can be changing over time, for example, the structured light pattern can comprise a predefined sequence of predefined patterns or sub-patterns, which can be known to the visual surveying algorithm or wherein the structured light pattern can comprise a sequence of random or pseudo-random structured light patterns.

The projected pattern can comprise fiducial markers, in particular uniformly seeded checkboard markers, which can be comprised in a random or pseudo-random speckle pattern or in a coded light pattern. Thereby a correspondence between projected and recovered pattern determined and considered in the evaluation.

The invention also relates to an according method for three dimensional surveying of a surface comprising an imaging of at least part of the surface by a camera unit at a first mobile vehicle with the cameras field of view at least partially directed towards the surface, and a calculating of a visual surveying algorithm based on the images from the camera unit by a computer-vision unit and determining a topology of the surface and a location relative to the surface by the visual surveying algorithm, in particular in form of a point cloud.

According to the invention, also an emitting of a defined structured light pattern onto the surface takes place by a light projection unit of at least one separate second mobile vehicle. Therein, the imaging of the first mobile vehicle at least partially perceives the structured light pattern on the surface that is emitted from the second mobile vehicle. The visual surveying algorithm is at least partially evaluating the structured light pattern. The method according to the invention is in particular executed in a system according to the invention as described in this document.

At least one of the first and/or the second mobile vehicles can be unmanned aerial vehicles (UAV) which are airborne for the execution of the method, in particular wherein the first and/or the second mobile vehicle is at least partially autonomously moving and controlled by a comprised computation unit according to three dimensional information at least partially based on the results of the visual surveying algorithm.

The visual surveying algorithm comprises a simultaneous location and mapping (SLAM) algorithm determining the topology of the surface and the location relative to the surface. The first and second mobile vehicles can be moving with respect to each other. This moving can be controlled at least partially based on the results of the visual surveying algorithm.

Apparently, the here mentioned further developments which are described with respect to the system are applicable in form of a corresponding method as well, in particular on basis of the above cited method.

The method according to the present invention, or at least those parts of it which involve computation, can also be embodied as a computer program product, in particular as a computer program product that is stored on a machine readable medium or a computer-data-signal embodied as electromagnetic wave (such as wired or wireless data signal). The computer program product implements a visual surveying algorithm which is at least partially evaluating digital images from a camera at a first mobile vehicle and which is evaluating a light pattern in the digital images that is resulting from a projection of a separate, second mobile vehicle which is emitting a defined structured light pattern at least partially into the field of view of the camera at the first mobile vehicle. Thereby, the computer program product calculates three dimensional spatial surveying information of a surface. The computer program product comprises Simultaneous Location And Mapping (SLAM) algorithm, in particular similar as known in the art but supplemented according to the invention by the marginal conditions and constraints given by the flexibly mobile projection and imaging of the separated vehicles, preferably wherein conditions given by a detection of the projection within the digital image is dissolving ambiguities of the determined three dimensional surveying data.

Devices, methods and setups according to the invention are described or explained in more detail below, purely by way of example, with reference to working examples shown schematically in the drawing. Specifically,
- Fig. 1: shows an example of a first embodiment of a three dimensional surveying system according to the invention with two mobile air vehicles in an outdoor application;
- Fig. 2: shows an example of a second embodiment of a three dimensional surveying system according to the invention with two mobile ground vehicles in an outdoor application;
- Fig. 3: shows an example of a third embodiment of a three dimensional surveying system according to the invention with two mobile ground and two mobile air vehicles in an indoor application;
- Fig. 4: shows an example of a fourth embodiment of a three dimensional surveying system according to the invention;
- Fig. 5: shows an example of a fifth embodiment of a three dimensional surveying system according to the invention;
- Fig. 6: shows an example of a simplified block diagram of a three dimensional surveying method according to the invention;
- Fig. 7: shows an example of an embodiment of light pattern according to the invention.

The diagrams of the following figures should not be considered as being drawn to scale. Where appropriate, the same reference signs are used for the same features or for features with similar functionalities. Different indices to reference signs are used to differentiate between different embodiments of a feature.

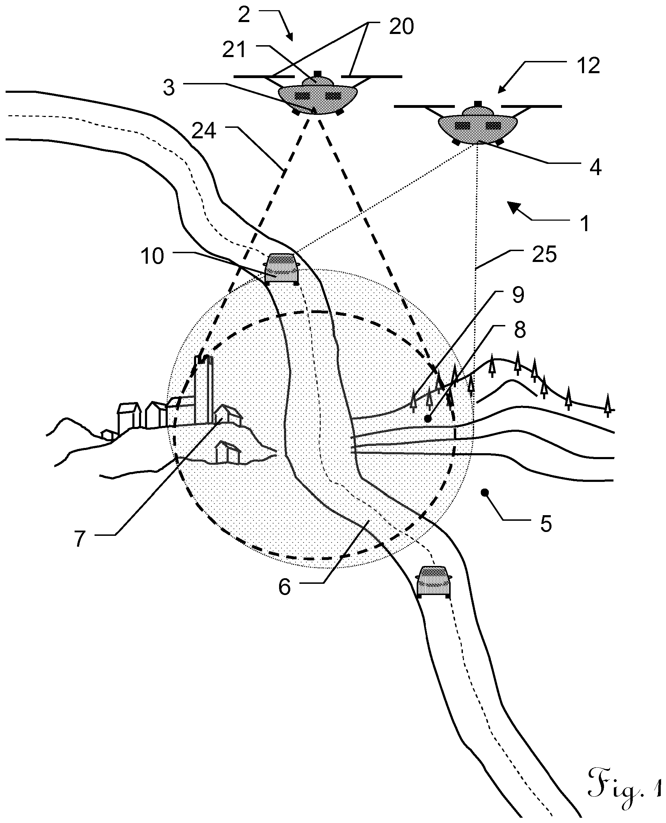

**Fig. 1** illustrates an example of an embodiment of a surveying system 1 according to the invention. There is a first mobile vehicle 2, which is here shown as an unmanned airborne drone, also called unmanned aerial vehicle (UAV). The shown first mobile vehicle 2 is built to be mobile in air, for example comprising on or more rotor blades 20 and a body 21 comprising sensors and a computation unit, e.g. a quadcopter capable of floating in midair into any desired direction or another airborne vehicle. The first mobile vehicle 2 is equipped with a camera unit 3 that is according to the invention used for surveying purpose. The surveying is done at least partially based on images from the camera unit 3, which are evaluated by a computer vision algorithm. This evaluation is preferably done by the before mentioned onboard computation unit of the first mobile vehicle 2, but can in another embodiment also at least partly be done by a remote, e.g. a ground based, computation unit. An example of a field of view 24 of the camera unit 3 is shown by thick dashed lines. The field of view 24 is here exemplary shown to be substantially coneshaped, whereas in another embodiment, the field of view 24 can be shaped differently (e.g. substantially in form of a pyramid or the like). The field of view 24 can not only be fixed but can also be variable in its direction with respect to the first mobile vehicle 2 and/or in its size. The field of view 24 of the camera unit 3 is here directed toward ground, as the ground surface is the surface 5 which is desired to be surveyed in three dimensions, which in particular means to determine a topography of the surface 5 in form of three dimensional data. For example, it can be a task to survey the road 6 for potholes, settlements, etc. or to capture a topography of the houses 7, of the hills 8, of the vegetation 9, and or other objects of which the surface topology is of interest. As the mobile vehicle is movable, the surface 5 to be surveyed is not static but variable, e.g. it would also be possible to follow a car 10 or another object for surveillance purposes or the like. For such a surveying task, there can be one or more of such first mobile vehicles 2 in use at the same time.

The surface-topology is surveyed according to images from the camera unit 3 by means of a visual surveying algorithm. This means that, based on the images from the camera unit 3, three dimensional information with respect to the portion of the surface 5 in the field of view 24 of the camera unit 3 or of a part of this field of view 24 is calculated by a computer vision unit. The computer vision unit is preferably comprised in the mobile vehicle 2, but can also be at least partially remote from the mobile vehicle 2. As the first mobile vehicle 2 moves, the portion of the surface 5 in the field of view 24 of the camera unit 3 changes and information with respect to this movement can be provided to the computer vision unit to be incorporated in the visual surveying algorithm calculation.

Instances of such visual surveying algorithms are for example called "Structure From Motion" (SFM) algorithms, which roughly means that due different perspectives of the camera unit 3 during movement of the first mobile vehicle 2, the algorithm extracts three dimensional information with respect to one or more surfaces 5 within the field of view 24 of the camera unit 3. There are many different flavours of such SFM-algorithms, which vary in their implementation details and can be found in according background literature, papers or software projects like SFMToolkit or VisualSFM or the like. Another instance of such visual surveying algorithms are for example called "Simultaneous Localisation And Mapping" (SLAM) algorithms, which roughly described are not only determining the surface topology based in the images from the camera unit 3 (=Mapping), but at the same time determine a location of the camera unit 3 (respectively of the first mobile vehicle 2 carrying the camera unit 3) based on those images (=Localisation). Again, there are multiple approaches known to implement (SLAM) algorithms, which can also be found in according background literature, papers or software projects like openslam.org or the like.

According to the invention, the surveying system 1 comprises at least one additional and separate second mobile vehicle 12. In this figure, the second mobile vehicle 12 is also embodied as a UAV, e.g. like discussed above. In another embodiment according to the invention, the first as well as the second mobile vehicles 2,12 can also comprise a random mixture of air, ground and/or water vehicles.

This second UAV 12 comprises a light projection unit 4 built to emit a defined structured light pattern 25 onto the surface 5 to be surveyed or at least on part of the surface 5 to be surveyed. In the here shown embodiment, the part of the surface 5 where the light pattern is projected to, is roughly about the same size as the field of view 24 of the camera unit 3. In other embodiments, the projection is preferably kept to be substantially comprised within the field of view 24 of the camera unit 3 of the first UAV, in particular as an emitted pattern out of a surveying camera view 24 can not contribute to the surveying. In particular, the emission of the light pattern 25 is substantially directed onto a part of the surface 5 to be surveyed, where the surveying by a first mobile vehicle's camera unit 3 is providing unsatisfiable or ambiguous results when the light pattern is not present.

In other words, the invention can be described to concern surveying a target surface by imaging the surface with a camera unit at a first vehicle, which surface gets projected by a light pattern from a projection unit at a second vehicle, wherein the second vehicle is separate from the first vehicle and both first and second vehicle can move freely an independent with respect to each other. In the present invention, there is no physical link between the camera unit and the projection unit.

The first and/or second mobile vehicle 2,12 can be moving during surveying. For example, in a first illustrative embodiment, both the first and the second UAVs 2,12, can progress along a desired track (e.g. the road 6) or can raster a desired area during the surveying. In particular, at least one of the first and/or second mobile vehicles 2,12 can be a master vehicle, commanding one or more of the remaining mobile vehicles in their movements. For example, the computation unit which is processing the surveying can be embodied to also provide navigation information to the first and/or second mobile vehicles 2,12. The first and/or second moving vehicles 2,12 can comprise a, preferably wireless, communication interface to communicate in-between each other and/or with one or more remote stations.

As mentioned above, the camera unit 3 of the first mobile vehicle 2 at least partially images the emitted light 25 from the second mobile vehicle 12 on the surface 5 or on part of this surface 5. Dependent on the topology of the to be surveyed surface 5, as well as dependent on the origin and optical properties of the light projection unit 4 and dependent on the location and optical properties of the camera unit 3, the image of the projected light pattern 25 from the second mobile vehicle 12 on the surface, which is taken by the camera unit 3 can vary. Therein, the computer-vision unit executes the visual surveying algorithm, which is built to at least partially evaluate a three dimensional survey or topography of the surface 5.

In all embodiments presented in this document, there can always be more than one first and/or second mobile vehicles 2,12.

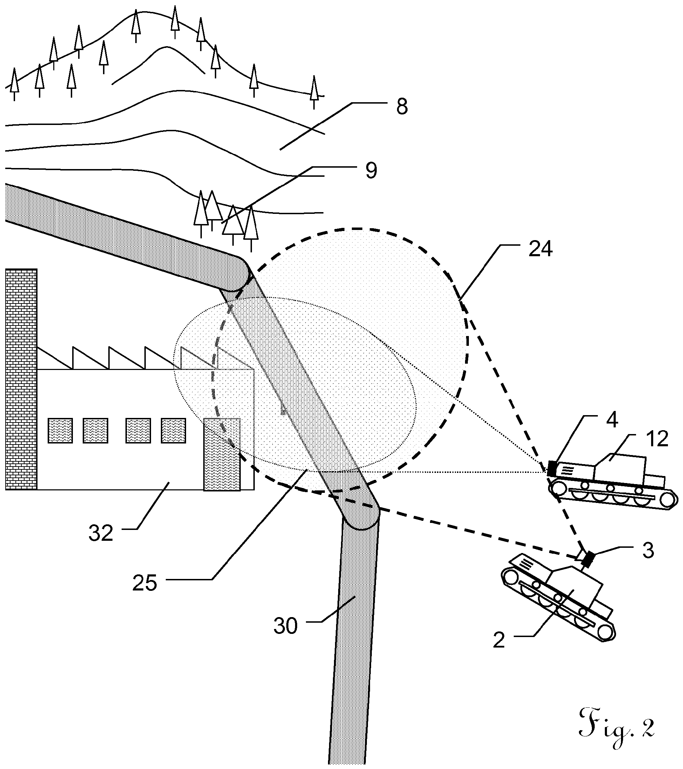

**Fig. 2** shows another example of an embodiment of a system 1 for three dimensional surveying of a surface according to the invention. Here, the mobile vehicles 2,12 are embodied as rover units moving on ground, like in form of wheeled or tracked vehicles. In this example, the system 1 has the task to survey the shown pipeline 30. The task can e.g. comprise to check for movements, damages, deformation, displacements, etc. by surveying the shape, size and/or position of the outer surface of the pipeline 30, which surveying results can be compared to desired values or values of previous measurements. Illegal tapping, overgrowing by vegetation or the like can also be detected in the surveying data. The mobile vehicles 2,12 can for example move along a maintenance and emergency track running along the pipeline 30. In alternative embodiments, the mobile vehicles 2,12 can e.g. also run inside of the pipeline 30, and/or airborne mobile vehicles 2,20 can be used in addition or alternatively. In an embodiment, the mobile vehicles 2,12 can be autonomous or semi-autonomous, which means that for example they can be provided with the general task of following the pipeline 30, whereby the mobile vehicles 2,12 will autonomously execute this task and automatically compute how they have to move to accomplish this task.

The uniformly painted outer surface of the pipeline 30 can be difficult to survey by image processing according to prior art, as the uniform surface can comprise too little visual features to for a classic visual surveying algorithm without an illumination pattern emitted towards it, as it is done according to the present invention.

In another example, the system 1 can have the task to survey the building 32 from outside and/or inside, e.g. a factory or a power plant, which it is potentially too hazardous for human workers after a disaster or in a warscenery. According to the invention, this is done by a system 1 of at least one first mobile vehicle 2 comprising a camera unit 3 and at least a second mobile vehicle 12 comprising a projection unit 4 for emitting light in a defined structured pattern. The first and second mobile vehicles 2,12 are moving inside and/or outside of the building 32, preferably autonomous - but alternatively also assisted or navigated by a human operator via a wired or wireless data link. A computer-vision unit then executes a visual surveying algorithm based the images from the camera unit and determines three dimensional information, wherein the light pattern 25 emitted by the second mobile vehicle 12 which is at least partly comprised in the imaged field of view 24 of the camera unit 3 is evaluated by the visual surveying algorithm. The visual surveying algorithm can therein gain additional information based on image of the projected pattern on the surface, and based on this additional information spatial surveying information can be determined and/or otherwise present ambiguities can be resolved, which both can result in faster and more accurate three dimensional surveying results.

The field of view of the camera unit 3 and/or the emission field of the projection unit 4 can be fixed with respect to the corresponding mobile vehicle 2 resp. 12, but it can also be variable in its direction, size and/or shape, e.g. by a tilting, rotating and/or zooming unit.

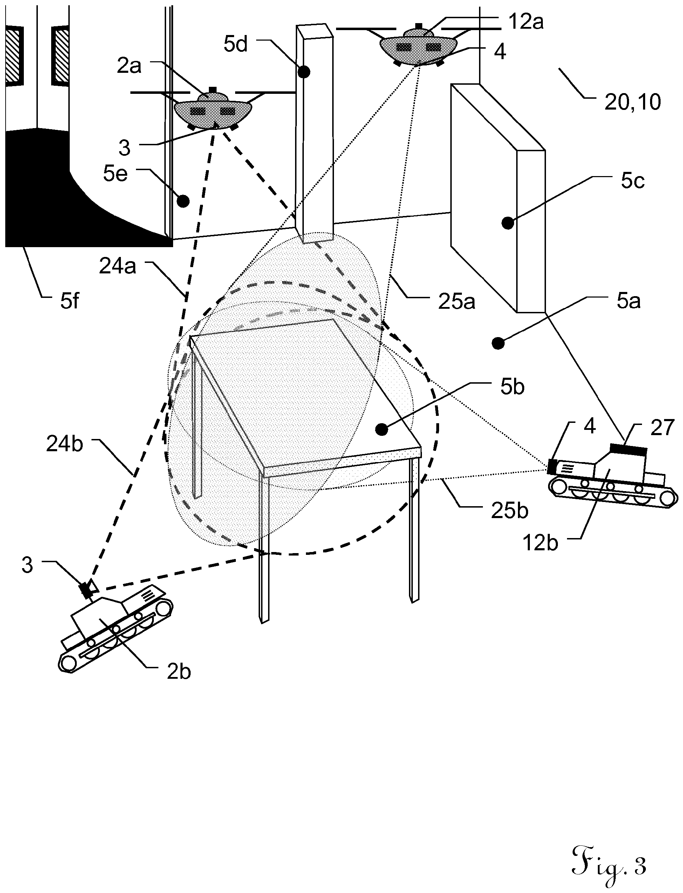

**Fig. 3** shows another an example of an embodiment of a three dimensional surveying system 1 according to the invention in an indoor application. There are multiple mobile vehicles 2a,2b,12a,12b, wherein the mobile vehicles 2a and 2b are first mobile vehicles characterized by comprising at least one camera unit 3 for surveying and wherein the mobile vehicles 12a,12b are second mobile vehicles characterized by comprising at least one projection unit 4 - according to the above used terminology. In the shown example of an embodiment, the mobile vehicles 2a and 12a are airborn, whereas the mobile vehicles 2b and 12b are ground vehicles. According to the invention, those mobile vehicles 2a,2b,12a,12b collaborate in the surveying system and procedure. In this example, there is a room 5a with a table 5b, furniture 5c, a pole 5d, a wall 5e and a hallway 5f shown, which's outer hulls - forming the three dimensional environment - can be considered to be the surface targeted to be surveyed. The system 1 will thereby survey a 3D model of the room or of part of it, preferably with colour textures based on information from images from the camera units 3. The airborne mobile vehicles 2a,12a are in particular predestined to survey top and side views, but might be unfavourable for view from below, like the floor beneath the table, the underside of the table, the ceiling, etc. By the here shown collaboration of ground vehicles 2b,12b and air vehicles 2a,12a, those drawbacks can be overcome and a substantially complete 3D modeling of the room can be surveyed.

The flying drone 12a as a second mobile vehicle comprises a projection unit 4 for emitting a light pattern, as indicated by the symbolized emission cone 25a. The light pattern 25a can be a structure of lit and unlit areas, by projecting specks of different light intensity. This can for example be achieved by masking of the emitted light (like in an LCD-Projector), by directing the light (line in a DLP-Projector), by individually controlling multiple collimated light sources (like a laser projector), by controlling a deflection of a light beam along a desired path (like in a laser scanning projector), wherein in latter the light source can emit continuously and the deflection path defines the pattern or wherein the light source is modulated in its intensity (resp. turned on and of) during the deflection. The figure shows a simple example of a spot pattern that is emitted in the emission cone 25a, which is not to be considered limiting in its peculiarity. Optionally, the optical axis of the projection unit 4 can be moveable with respect to the mobile vehicle 12a which is carrying it, so that the emission can be directed towards a desired target area, independent of the pose and/or movement of the mobile vehicle 12a. The optical axis of the projection unit 4 and/or the projection size can also be moveable by moving the mobile vehicle 12 which comprises the projection unit 4 with respect to the targeted surface 5.

In a similar manner, the rover unit 12b - as another second mobile vehicle - also comprises a projection unit 4 for emitting a light pattern indicated by 25b.

The flying drone 2a as a first mobile vehicle comprises a camera unit 3 built to capture electronic images or video sequences, e.g. comprising a CCD- or CMOS-sensor with an array of photosensitive pixels and an imaging optics. The camera unit's images can be monochrome or comprise multiple colour channels, which can, in addition and/or alternatively to the visual spectrum, also comprise an infrared and/or ultraviolet range. The camera unit 3 has a field of view 24a in the direction of its optical axis, which field of view 24a will be directed to substantially comprise at least partially the target to be surveyed. This directing can be achieved by moving the mobile vehicle 2a with the camera unit 3 and/or by moving the optical axis of the camera unit 3 with respect to the mobile vehicle 2a.

The mobile vehicles can be built to locate and/or identify each other. For example the mobile vehicles can comprise tags 27, which can be read out optically, e.g. by the camera unit 3 and by which an identification and/or location of the mobile vehicle can be established. An identification and/or location of the mobile vehicles with respect to each other by means of radio signals is another option.

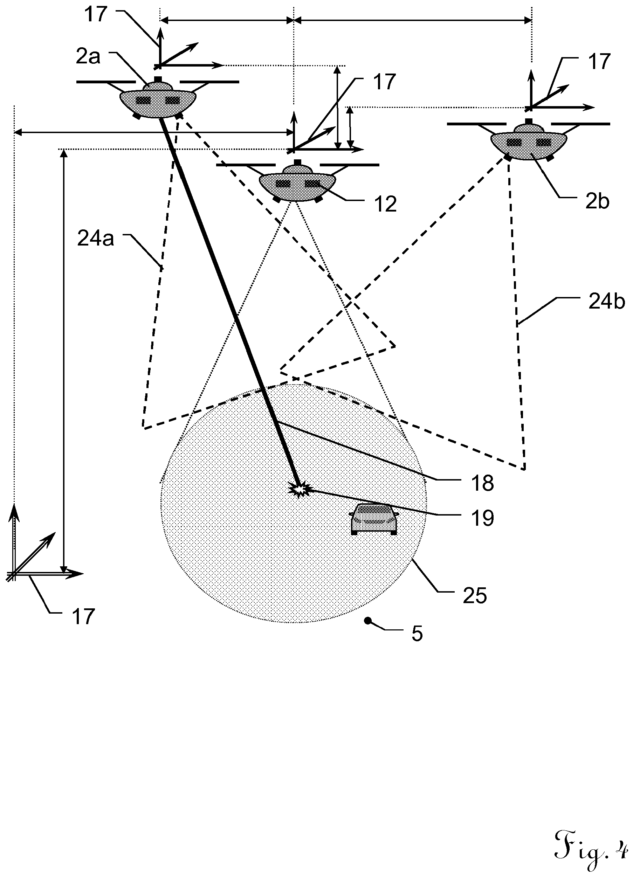

**Fig. 4** shows an example of an embodiment of a mobile vehicle surveying system 1 according to the invention.

The mobile vehicles 2a and 2b comprise a camera unit 3 for surveying the topology of the surface 5 by a visual surveying algorithm based on images from the camera units 3.

For each of the mobile vehicles 2a,2b,12 and for the surface 5, a corresponding coordinate system 17 is symbolized, in particular wherein the coordinate system 17 for the target surface 5 can be defined as an origin of the desired surveying coordinate system. The relative and/or absolute location of those coordinate systems 17 with respect to each other are exemplary indicated by the shown dimensional lines. Those locations can for example be known by absolute and/or relative position tracking units at one or more of the mobile vehicles 2a,2b,12. Alternatively or in addition, those locations can also be determined according to the surveying capabilities of the system 1 according to the invention, in particular comprising a usage of a SLAM algorithm as visual surveying algorithm for navigation of a mobile vehicles and/or an image processing of one or more markers on another mobile vehicle in view of the camera unit 3 can be used to determine the locations.

The mobile vehicle 12 comprises a projection unit 4, built for emitting a light pattern to the surface 5, as indicated by the textured area 25 on the surface 5 and the corresponding emission cone from the second mobile vehicle 12.

Here shown is an embodiment with a guidance-beam 18 emitted by the mobile vehicle 2a directed to ground 5, and resulting light-spot 19 on ground is followed by the second mobile vehicle 12 and/or first mobile vehicle 2b. The guidance-beam 18 can comprise a modulation information for data transmission, whereby for example a command like a desired location relative to the guidance beam can be transmitted. The guidance-beam following mobile vehicles 12 and/or 2b can receive and evaluate the modulated data, for example by its camera unit. Thereby, the receiving mobile vehicle can for example be remote controlled in its location and/or movement by the emitting mobile vehicle. For example, the following mobile vehicle can be commanded to automatically move in such a way, to keep the light-spot 19 within a certain area or at a certain spot in its cameras field of view and/or to keep the light-spot 19 at a defined shape and/or size in the image of its cameras field of view. The guidance beam can be formed by visible and/or invisible light and can be coded by colour, modulation, polarity, shape, size, etc. for example to address one specific mobile client vehicle. The guidance-beam emitting mobile vehicle can therein be considered as a master vehicle, which is commanding one or more slave-vehicles. The roles of master vehicle respectively slave vehicle can be associated either to a first mobile vehicle or to a second mobile vehicle according to the invention.

Alternatively or in addition, there can also be a wireless radio communication link established between the mobile client devices 2a,2b,12, wherein the radio signals can exclusively or in addition be used for determining a location of the mobile vehicles with respect to one another like a multilateration as known from WIFI or GSM networks.

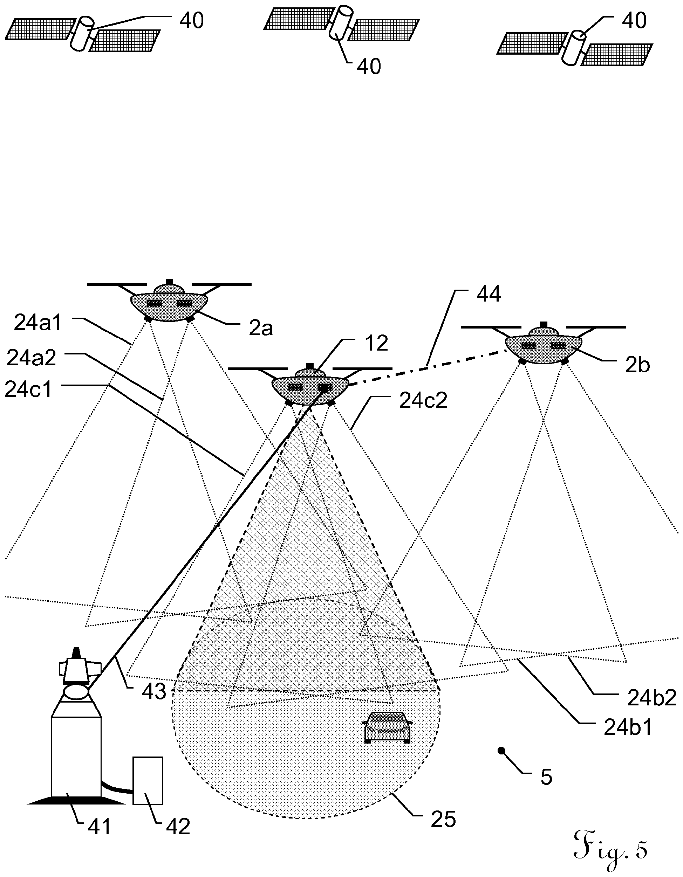

In **Fig. 5****,** an example of an embodiment according to the invention is shown, with three mobile vehicles 2a,2b,12. The second mobile vehicle 12 comprises a projection unit emitting a defined light pattern 25 toward the surface 5 to be three dimensionally surveyed.

The first mobile vehicles 2a,2b each comprise camera units. In the shown example there are two camera units at each first mobile vehicle 2a,2b and optionally also at the second mobile vehicle 12. In the shown embodiment, the fields of view of the vehicles camera units - indicated by the cones 24a1 and 24a2, 24b1 and 24b2 respective 24c1 and 24c2 - are at least partially overlapping. The overlapping of the fields of view can be used to calculate a stereo vision algorithm, either based on images of the cameras of only a single mobile vehicle and/or based on images from cameras of multiple of the mobile vehicles, with or without exact knowledge of their locations with respect to each other that gives a stereo basis. This stereo vision algorithm can also be comprised in the visual surveying algorithm according to the invention, in particular wherein the projected pattern 25 from the second mobile vehicle 12 is incorporated in the computation of the three dimensional surveying. As said, in other embodiments the camera unit can only comprise a single field of view, or the fields of view of the cameras can be substantially non-overlapping.

In this embodiment, there is a base station 41 emitting a guidance beam 43 towards at least one of the mobile vehicles 12, and the receiving mobile vehicle is built to follow this guidance beam 43. The guidance beam can also be used to survey the location of the targeted mobile vehicle with respect to the base station 41 or transformed to another coordinate system, for example comprising electro-optical distance measurement in direction of the beam 43 and a determination angular coordinates of the emission direction of the beam 43. The beam 43 can also be modulated and comprise information as discussed below. The computation of the spatial information and/or at least part of the surveying algorithms can for example also be done by the computation unit 42.

Also shown are navigation satellites 40, wherein one or more of the mobile vehicles 2a,2b,12 can be built to determine it's location on basis of electromagnetic signals from those satellites 40. This can for example be done in addition or alternatively to the guidance by the base station 41.

As another alternative and/or for fine-referencing of the location of the mobile vehicles, there can be a guidance light beam from one mobile vehicle 12 to another of the mobile vehicles 2b, respectively vice-versa. For example, the mobile vehicle 12 emits a beam 44 in the direction where the mobile client device 2b should be. The mobile vehicle 2b comprises a receiver for this beam 44 and is built to follow this beam, for example by keeping the beams striking point and/or direction within a defined tolerance range. This beam 44 can be modulated and comprise information, for example beside general data, also data for remote controlling the mobile vehicle 2b in it's movements, in particular to navigate the mobile vehicle 2b along the axis of the light beam - which is not defined by the direction of the emission alone. In such an embodiment, the mobile vehicle 12 can be considered in the role of a guiding master and the mobile vehicle 2b in the role of a following slave. The guidance beam can also embody an electro-optic distance meter, which determines the distance between the mobile vehicles based on a time of flight or phase measurement.

In an alternative embodiment, the roles of the mobile vehicles 12 and 2a,2b as first and second mobile vehicles could also be the other way round.

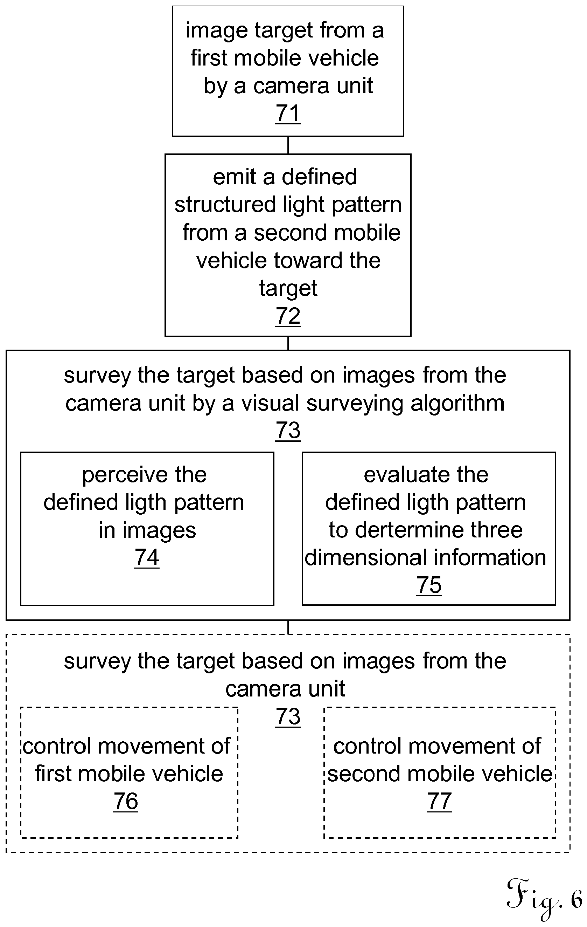

In **Fig. 6****,** an example of a block diagram of an embodiment of the invention is shown. The three dimensional surveying of a surface 5 comprises an imaging of at least part of the surface 5 - as target to be surveyed - by a camera unit 3 at a first mobile vehicle 2a,2b with its field of view 24 at least partially directed towards the surface 5 in block 71.

According to the invention, an emitting a defined structured light pattern 25 onto the surface 5 by a light projection unit 4 is done from at least one second mobile vehicle 12, as indicated by block 72. Therein the second mobile vehicle 12 is separate and freely movable with respect to the first mobile vehicle 2a,2b.

In block 73, a calculating of a visual surveying algorithm based on images from the camera unit 3 by a computer-vision unit is done for determining a topology of the surface 5 and/or a location relative to the surface 5, for example resulting in a point cloud representing a three dimensional topography of the surface 5.

Therein, the imaging of the first mobile vehicle 2a,2b at least partially perceives the structured light pattern 25 from the second mobile vehicle 12 as indicated in block 74, and the visual surveying algorithm is at least partially evaluating the structured light pattern 25 for determining three dimensional information of the target in the visual surveying algorithm, as indicated in block 75.

Optionally, a commanding of a movement of the first mobile vehicle 2a,2b and/or of the second mobile vehicle 12 can be done as indicated by block 76 and block 77.

Such a system is much more flexible, for example the projection of the pattern can exclusively target areas of the surface 5 which are otherwise difficult or ambiguous in a visual surveying algorithm, the direction and/or size of the projected pattern can be changed by moving the second mobile vehicle to fit to the shape of the surface 5, the projected pattern can vary within the image to gain additional information while the pattern itself is static but by movements of the second mobile vehicle, etc.

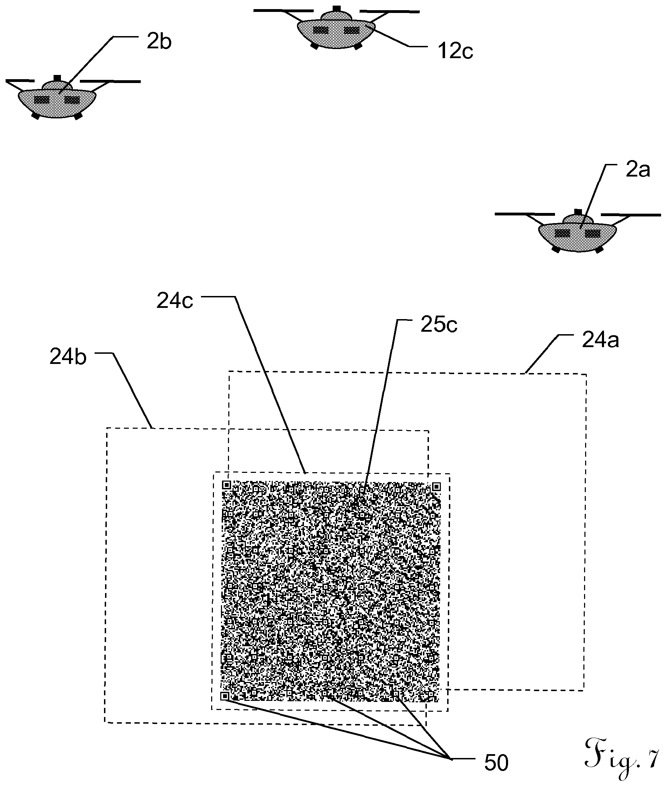

In **Fig. 7****,** an example of an embodiment according to the invention is shown, in which an exemplary structured pattern 25c, which is emitted by the second mobile vehicle 12c. The second mobile vehicle 12c comprises also a camera unit that is adopted to have the field of view 24c. The structured pattern 25c comprises visual fiducial markers 50 and/or a checkboard pattern, which can be non-ambiguously recognized and surveyed in a camera image by a visual surveying algorithm, preferably also when the projected pattern 25c is distorted by an uneven projection surface. According to the invention, this visual surveying is done by the mobile vehicle 2a and/or the mobile vehicle 2b, which comprise camera units with the shown field of view 24b respectively the field of view 24a. Optionally, also the second mobile vehicle 12c can comprise a camera, as indicated by the field of view 24c.

The projected pattern 25c can be static or it can be dynamically changing, either according to a defined sequence of defined patterns or in random or pseudo-random. The mobile vehicles can move in a desired formation and/or along desired paths during the surveying. In another embodiment, the formation and/or the paths of movement of each of the vehicles can be adapted dynamically, preferably by an autonomous or semi autonomous control computed by a computation unit, in particular wherein the control is built in such a way to improve and/or complete the surveying result.

A skilled person is aware of the fact that details, which are here shown and explained with respect to different embodiments, can also be combined in other permutations within the sense of the invention.

## Claims

1. System (1) for three dimensional surveying of a surface (5) comprising
at least a first mobile vehicle (2) with
o at least one camera unit (3) with its field of view at least partially directed towards the surface (5) for imaging the surface (5), and
o a computer-vision unit built to execute a visual surveying algorithm based on images from the camera unit (3) for determining a topology of the surface (5) and/or a location of the first mobile vehicle (2) relative to the surface (5),
**characterized by**
at least a second mobile vehicle (12) comprising a light projection unit (4) built to emit a structured light pattern (25) onto the surface (5),
wherein the camera unit (3) of the first mobile vehicle (2) at least partially images the structured light pattern (25) projected from the second mobile vehicle (12) to the surface (5) and
wherein the visual surveying algorithm comprises an evaluation of the imaged structured light pattern (25) on the surface (5),
wherein the visual surveying algorithm comprises a simultaneous location and mapping (SLAM) algorithm, determining the topology of the surface and the location of the first mobile vehicle (2) relative to the surface (5).

2. A system (1) according to claim 1, **characterized in that** the topology of the surface (5) is determined in form of a point cloud.

3. A system (1) according to claim 1 or 2, **characterized in that** the structured light pattern comprises a predefined sequence of predefined patterns, which are known to the visual surveying algorithm.

4. A system (1) according to any one of claim 1 to 3, **characterized in that** the first and the second mobile vehicle (2,12) are unmanned mobile vehicles, controlled by a comprised computation unit, based on the determined topology of the surface (5) and/or location relative to the surface (5).

5. A system (1) according to any one of claim 1 to 4, **characterized in that** at least one of the first and/or second mobile vehicle (2,12) is an unmanned aerial vehicle (UAV).

6. A system (1) according to any one of claim 1 to 5, **characterized in that** a relative position from at least one of the first mobile vehicle (2) with respect to at least one of the second mobile vehicle (12) is variable and controlled by at least one of the first mobile vehicles (2).

7. A system (1) according to any one of claim 1 to 6, **characterized in that** at least one of the first and/or second mobile vehicle (2,12) comprises a location referencing unit built to provide a position information of the mobile vehicle.

8. A system (1) according to any one of claim 1 to 7, **characterized in that** at least one of the first and/or second mobile vehicle (2,12) emits guidance light beam for guiding one or more of the remaining mobile vehicles (2,12) which are evaluating the guidance light beam or its projection.

9. A system (1) according to any one of claim 1 to 8, **characterized in that** the emitted structured light pattern (25) is established by the light projection unit (4) with a fixed and/or dynamic masking of a light projection and/or with a moving beam.

10. A system (1) according to claim 9, **characterized in that** the structured light pattern (25) comprises a plurality of specks of different light intensity.

11. A method for three dimensional surveying of a surface (5) comprising:
imaging at least part of the surface by a camera unit (3) at a first mobile vehicle (2) with its field of view at least partially directed towards the surface (5), and
calculating a visual surveying algorithm based on images from the camera unit (3) by a computer-vision unit for determining a topology of the surface (5) and/or a location of the first mobile vehicle (2) relative to the surface (5),
**characterized by**
emitting a structured light pattern (25) onto the surface by a light projection unit (4) of at least one second mobile vehicle (12),
wherein the imaging at the first mobile vehicle (2) comprises at least partially perceiving the structured light pattern (25) projected from the second mobile vehicle (12) on the surface (5), wherein the visual surveying algorithm comprises a simultaneous location and mapping (SLAM) algorithm determining the topology of the surface (5) and the location relative to the surface (5) and
wherein the visual surveying algorithm is at least partially evaluating the perceived structured light pattern (25).

12. A method according to claim 11, **characterized in that** at least one of the first and/or the second mobile vehicles (2,12) are unmanned aerial vehicles (UAV) which are airborne for the method.

13. A method according to any one of claim 11 to 12, **characterized in that** the structured light pattern comprises a predefined sequence of predefined patterns, which are known to the visual surveying algorithm.

14. A method according to any one of claim 11 to 13, **characterized in that** the first and second mobile vehicles (2,12) are moving with respect to each other.

15. Computer program product comprising program code which is stored on a machine-readable medium or provided as a computer-data-signal embodied as an electromagnetic wave, wherein the program code implements a visual surveying algorithm which is at least partially evaluating digital images from a camera unit (3), which camera unit (3) is comprised at a first mobile vehicle (2),
which visual surveying algorithm comprises a simultaneous location and mapping (SLAM) algorithm determining a topology of a surface (5) and a location of the first mobile vehicle (2) relative to the surface (5) and which visual surveying algorithm is evaluating a structured light pattern (25) in the digital images that is resulting from a projection of a separate, second mobile vehicle (12), which is emitting the structured light pattern (25) at least partially into the field of view of the camera unit (3) at the first mobile vehicle (2).

## Patentansprüche

1. System (1) zum dreidimensionalen Überwachen einer Fläche (5), das Folgendes umfasst:
mindestens ein erstes mobiles Fahrzeug (2) mit
o mindestens einer Kameraeinheit (3), deren Sichtfeld mindestens teilweise in Richtung der Fläche (5) gerichtet ist, um die Fläche (5) abzubilden, und
o eine Einheit für maschinelles Sehen, die dazu konstruiert ist, einen Algorithmus für visuelles Überwachen auf Grundlage von Bildern von der Kameraeinheit (3) auszuführen, um eine Topologie der Fläche (5) und/oder einen Standort des ersten mobilen Fahrzeugs (2) relativ zu der Fläche (5) zu bestimmen,
**gekennzeichnet durch**
mindestens ein zweites mobiles Fahrzeug (12), das eine Lichtprojektionseinheit (4) umfasst, die dazu konstruiert ist, ein strukturiertes Lichtmuster (25) auf die Fläche (5) zu emittieren,
wobei die Kameraeinheit (3) des ersten mobilen Fahrzeugs (2) das strukturierte Lichtmuster (25), das von dem zweiten mobilen Fahrzeug (12) auf die Fläche (5) projiziert wird, mindestens teilweise abbildet, und
wobei der Algorithmus für visuelles Überwachen eine Auswertung des dargestellten strukturierten Lichtmusters (25) auf der Fläche (5) umfasst,
wobei der Algorithmus für visuelles Überwachen einen Algorithmus für simultane Lokalisierung und Kartierung (SLAM) umfasst, um die Topologie der Fläche und den Standort des ersten mobilen Fahrzeugs (2) relativ zu der Fläche (5) zu bestimmen.

2. System (1) nach Anspruch 1, **dadurch gekennzeichnet, dass** die Topologie der Fläche (5) in Form einer Punktwolke bestimmt wird.

3. System (1) nach Anspruch 1 oder 2, **dadurch gekennzeichnet, dass** das strukturierte Lichtmuster eine vordefinierte Sequenz von vordefinierten Mustern umfasst, die dem Algorithmus für visuelles Überwachen bekannt sind.

4. System (1) nach einem der Ansprüche 1 bis 3, **dadurch gekennzeichnet, dass** es sich bei dem ersten und dem zweiten mobilen Fahrzeug (2, 12) um unbemannte mobile Fahrzeuge handelt, die durch eine enthaltene Berechnungseinheit auf Grundlage der bestimmten Topologie der Fläche (5) und/oder des bestimmten Standorts relativ zu der Fläche (5) gesteuert werden.

5. System (1) nach einem der Ansprüche 1 bis 4, **dadurch gekennzeichnet, dass** es sich bei mindestens einem des ersten und/oder des zweiten mobilen Fahrzeugs (2, 12) um ein unbemanntes Luftfahrzeug (UAV) handelt.

6. System (1) nach einem der Ansprüche 1 bis 5, **dadurch gekennzeichnet, dass** eine relative Position von mindestens einem des ersten mobilen Fahrzeugs (2) in Bezug auf mindestens eines des zweiten mobilen Fahrzeugs (12) durch mindestens eines der ersten mobilen Fahrzeuge (2) variabel ist und gesteuert wird.

7. System (1) nach einem der Ansprüche 1 bis 6, **dadurch gekennzeichnet, dass** mindestens eines des ersten und/oder des zweiten mobilen Fahrzeugs (2, 12) eine Standortreferenzierungseinheit umfasst, die dazu konstruiert ist, Positionsinformationen des mobilen Fahrzeugs bereitzustellen.

8. System (1) nach einem der Ansprüche 1 bis 7, **dadurch gekennzeichnet, dass** mindestens eines des ersten und/oder des zweiten mobilen Fahrzeugs (2, 12) einen Führungslichtstrahl zum Führen eines oder mehrerer der übrigen mobilen Fahrzeuge (2, 12) emittiert, welche den Führungslichtstrahl oder seine Projektion beurteilen.

9. System (1) nach einem der Ansprüche 1 bis 8, **dadurch gekennzeichnet, dass** das emittierte strukturierte Lichtmuster (25) durch die Lichtprojektionseinheit (4) mit einer festen und/oder dynamischen Maskierung einer Lichtprojektion und/oder mit einem sich bewegenden Strahl etabliert wird.

10. System (1) nach Anspruch 9, **dadurch gekennzeichnet, dass** das strukturierte Lichtmuster (25) eine Vielzahl von Flecken mit unterschiedlicher Lichtintensität umfasst.

11. Verfahren zum dreidimensionalen Überwachen einer Fläche (5), das Folgendes umfasst:
Abbilden von mindestens einem Teil der Fläche durch eine Kameraeinheit (3) an einem ersten mobilen Fahrzeug (2), deren Sichtfeld mindestens teilweise in Richtung der Fläche (5) gerichtet ist, und
Berechnen eines Algorithmus für visuelles Überwachen auf Grundlage der Bilder von der Kameraeinheit (3) durch eine Einheit für maschinelles Sehen, um eine Topologie der Fläche (5) und/oder einen Standort des ersten mobilen Fahrzeugs (2) relativ zu der Fläche (5) zu bestimmen,
**gekennzeichnet durch**
Emittieren eines strukturierten Lichtmusters (25) auf die Fläche durch eine Lichtprojektionseinheit (4) von mindestens einem zweiten mobilen Fahrzeug (12),
wobei das Abbilden an dem ersten mobilen Fahrzeug (2) mindestens teilweises Wahrnehmen des strukturierten Lichtmusters (25) umfasst, das von dem zweiten mobilen Fahrzeug (12) auf die Fläche (5) projiziert wird,
wobei der Algorithmus für visuelles Überwachen einen Algorithmus für simultane Lokalisierung und Kartierung (SLAM) umfasst, um die Topologie der Fläche (5) und den Standort relativ zu der Fläche (5) zu bestimmen, und
wobei der Algorithmus für visuelles Überwachen das wahrgenommene strukturierte Lichtmuster (25) mindestens teilweise auswertet.

12. Verfahren nach Anspruch 11, **dadurch gekennzeichnet, dass** es sich bei mindestens einem des ersten und/oder des zweiten mobilen Fahrzeugs (2, 12) um unbemannte Luftfahrzeuge (UAV) handelt, die sich für das Verfahren in der Luft befinden.

13. Verfahren nach einem der Ansprüche 11 bis 12, **dadurch gekennzeichnet, dass** das strukturierte Lichtmuster eine vordefinierte Sequenz von vordefinierten Mustern umfasst, die dem Algorithmus für visuelles Überwachen bekannt sind.

14. Verfahren nach einem der Ansprüche 11 bis 13, **dadurch gekennzeichnet, dass** sich das erste und das zweite mobile Fahrzeug (2, 12) in Bezug aufeinander bewegen.

15. Computerprogrammprodukt, das einen Programmcode umfasst, der auf einem maschinenlesbaren Medium gespeichert ist oder als ein Computer-Daten-Signal bereitgestellt wird, das als eine elektromagnetische Welle verkörpert ist,
wobei der Programmcode einen Algorithmus für visuelles Überwachen implementiert, der digitale Bilder von einer Kameraeinheit (3) mindestens teilweise auswertet, wobei die Kameraeinheit (3) an einem ersten mobilen Fahrzeug (2) enthalten ist,
wobei der Algorithmus für visuelles Überwachen einen Algorithmus für simultane Lokalisierung und Kartierung (SLAM) umfasst, um eine Topologie einer Fläche (5) und einen Standort des ersten mobilen Fahrzeugs (2) relativ zu der Fläche (5) zu bestimmen, und wobei der Algorithmus für visuelles Überwachen ein strukturiertes Lichtmuster (25) in den digitalen Bildern auswertet, das aus einer Projektion eines separaten, zweiten mobilen Fahrzeugs (12) resultiert, welches das strukturierte Lichtmuster (25) mindestens teilweise in das Sichtfeld der Kameraeinheit (3) an dem ersten mobilen Fahrzeug (2) emittiert.

## Revendications

1. Système (1) pour l'inspection en 3D d'une surface (5) comprenant au moins un premier véhicule mobile (2) avec
o au moins une unité de caméra (3) avec son champ de vision au moins partiellement dirigé vers la surface (5) pour faire une image de la surface (5) et
o une unité de vision par ordinateur construite pour exécuter un algorithme d'inspection visuelle basé sur des images de l'unité de caméra (3) pour déterminer une topologie de la surface (5) et/ou un emplacement du premier véhicule mobile (2) par rapport à la surface (5),
**caractérisé par**
au moins un second véhicule mobile (12) comprenant une unité de projection de lumière (4) construite pour émettre un motif de lumière structurée (25) sur la surface (5),
cependant que l'unité de caméra (3) du premier véhicule mobile (2) fait l'image au moins partiellement du motif de lumière structurée (25) projeté par le second véhicule mobile (12) sur la surface (5) et
cependant que l'algorithme d'inspection visuelle comprend une évaluation du motif de lumière structurée dont l'image a été faite (25) sur la surface (5), cependant que l'algorithme d'inspection visuelle comprend un algorithme de cartographie et localisation simultanées (SLAM) qui détermine la topologie de la surface et l'emplacement du premier véhicule mobile (2) par rapport à la surface (5).

2. Système (1) selon la revendication 1, **caractérisé en ce que** la topologie de la surface (5) est déterminée sous forme de nuage de points.

3. Système (1) selon la revendication 1 ou 2, **caractérisé en ce que** le motif de lumière structurée comprend une séquence prédéfinie de motifs prédéfinis qui sont connus par l'algorithme d'inspection visuelle.

4. Système (1) selon l'une quelconque des revendications 1 à 3, **caractérisé en ce que** le premier véhicule mobile et le second véhicule mobile (2, 12) sont des véhicules mobiles sans conducteur, commandés par une unité de calcul composée, basée sur la topologie déterminée de la surface (5) et/ou l'emplacement par rapport à la surface (5).

5. Système (1) selon l'une quelconque des revendications 1 à 4, **caractérisé en ce qu'**au moins l'un du premier et/ou du second véhicule mobile (2, 12) est un drone (UAV).

6. Système (1) selon l'une quelconque des revendications 1 à 5, **caractérisé en ce qu'**une position relative de l'au moins un premier véhicule mobile (2) par rapport à l'au moins un second véhicule mobile (12) est variable et commandée par au moins l'un des premiers véhicules mobiles (2).

7. Système (1) selon l'une quelconque des revendications 1 à 6, **caractérisé en ce qu'**au moins l'un du premier et/ou du second véhicule mobile (2, 12) comprend une unité de référencement de position construite pour fournir une information de position du véhicule mobile.

8. Système (1) selon l'une quelconque des revendications 1 à 7, **caractérisé en ce qu'**au moins l'un du premier et/ou du second véhicule mobile (2, 12) émet un faisceau lumineux de guidage pour guide un ou plusieurs des véhicules mobiles restants (2, 12) qui sont en train d'évaluer le faisceau lumineux de guidage ou sa projection.

9. Système (1) selon l'une quelconque des revendications 1 à 8, **caractérisé en ce que** le motif de lumière structurée émis (25) est établi par l'unité de projection de lumière (4) avec un masquage fixe et/ou dynamique d'une projection de lumière et/ou avec un faisceau qui se déplace.

10. Système (1) selon la revendication 9, **caractérisé en ce que** le motif de lumière structurée (25) comprend une pluralité de taches d'intensité de lumière différente.

11. Procédé pour l'inspection en 3D d'une surface (5) comprenant :
l'imagerie d'au moins une partie de la surface par une unité de caméra (3) sur un premier véhicule mobile (2) avec son champ de vision dirigé au moins partiellement vers la surface (5) et le calcul d'un algorithme d'inspection visuelle basé sur des images de l'unité de caméra par une unité de vision par ordinateur pour déterminer une topologie de la surface (5) et/ou un emplacement du premier véhicule mobile (2) par rapport à la surface (5),
**caractérisé par**
l'émission d'un motif de lumière structurée (25) sur la surface par une unité de projection de lumière (4) d'au moins un second véhicule mobile (12),
cependant que l'imagerie sur le premier véhicule mobile (2) comprend la perception au moins partiellement du motif de lumière structurée (25) projeté par le second véhicule mobile (12) sur la surface (5),
cependant que l'algorithme d'inspection visuelle comprend un algorithme de cartographie et localisation simultanées (SLAM) qui détermine la topologie de la surface (5) et l'emplacement du premier véhicule mobile (2) par rapport à la surface (5) et
cependant que l'algorithme d'inspection visuelle évalue au moins partiellement le motif de lumière structurée perçu (25).

12. Procédé selon la revendication 11, **caractérisé en ce qu'**au moins l'un du premier et/ou du second véhicule mobile (2, 12) est un drone (UAV) qui est/sont aéroporté(s) pour le procédé.

13. Procédé selon l'une quelconque des revendications 11 à 12, **caractérisé en ce que** le motif de lumière structurée comprend une séquence prédéfinie de motifs prédéfinis qui sont connus par l'algorithme d'inspection visuelle.

14. Procédé selon l'une quelconque des revendications 11 à 13, **caractérisé en ce que** le premier et le second véhicule mobile (2, 12) se déplacent l'un par rapport à l'autre.

15. Produit programme d'ordinateur qui comprend un code de programme qui est stocké sur un support lisible par machine ou fourni comme signal de données d'ordinateur incorporé en tant qu'onde électromagnétique, cependant que le code de programme met en oeuvre un algorithme d'inspection visuelle qui évalue au moins partiellement des images numériques d'une unité de caméra (3), laquelle unité de caméra (3) est comprise sur un premier véhicule mobile (2), lequel algorithme d'inspection visuelle comprend un algorithme de cartographie et localisation simultanées (SLAM) qui détermine la topologie de la surface (5) et l'emplacement du premier véhicule mobile (2) par rapport à la surface (5) et un emplacement du premier véhicule mobile (2) par rapport à la surface (5) et lequel algorithme d'inspection visuelle évalue un motif de lumière structurée (25) dans les images numériques qui résulte d'une projection d'un second véhicule mobile séparé (12) qui émet le motif de lumière structurée (25) au moins partiellement dans le champ de vision de l'unité de caméra (3) sur le premier véhicule mobile (2).
